# EUROPÄISCHE PATENTSCHRIFT

(11) **EP 1 285 315 B1**
(45) Veröffentlichungstag und Bekanntmachung des Hinweises auf die Patenterteilung: **23.05.2012**
(21) Anmeldenummer: 01943124.6
(22) Anmeldetag: 23.05.2001
(51) Int. Cl.: G06F 17/30

(54) **INFORMATIONSVERARBEITUNGSSYSTEM UND VERFAHREN ZU DESSEN BETRIEB**
INFORMATION PROCESSING SYSTEM AND METHOD FOR OPERATION THEREOF
SYSTEME DE TRAITEMENT D'INFORMATIONS ET SON PROCEDE D'EXPLOITATION

(30) Priorität: 23.05.2000 DE 10025050
(43) Veröffentlichungstag der Anmeldung: 26.02.2003
(73) Patentinhaber: T-Mobile Deutschland GmbH, 53227 Bonn (DE)
(72) Erfinder: CIORNEI, Adrian, 53229 Bonn (DE); KLABUNDE, Achim, 53175 Bonn (DE); STEIN, Wolfgang, 53773 Hennef (DE); TRUCHET, Eric, 53117 Bonn (DE)
(74) Vertreter: Riebling, Peter
(86) Internationale Anmeldenummer: PCT/DE2001/001932
(87) Internationale Veröffentlichungsnummer: WO 2001/090827

(56) Entgegenhaltungen:
- GB-A- 2 310 572
- GB-A- 2 319 863
- US-A- 5 329 619
- DWYER P A ET AL: "SOME EXPERIENCES WITH A DISTRIBUTED DATABASE TESTBED SYSTEM", PROCEEDINGS OF THE IEEE, IEEE. NEW YORK, US, vol. 75, no. 5, 1 May 1987 (1987-05-01), pages 633-648, XP000007273, ISSN: 0018-9219

## Beschreibung

Die Erfindung betrifft ein Informationsverarbeitungssystemen und ein Verfahren zu dessen Betrieb gemäss dem Oberbegriff der unabhängigen Patentansprüche.

Die Erfindung entstammt dem Gebiet der Modellierung komplexer Systeme. Es wird von einem Informationsverarbeitungssystem ausgegangen, mit welchem ein Datenaustausch zwischen mehreren technischen Anwendungen durchgeführt werden soll. Das wesentliche Problem bei der Modellierung komplexer Systeme besteht darin, die dynamische und die statische Modellsicht zur Deckung zu bringen. Die dynamische Modellsicht wird dabei in der Regel durch Prozessmodelle und die statische Modellsicht durch Datenmodelle dargestellt.

Im klassischen Verfahren wird in der Regel folgendermaßen vorgegangen:
1. Modellierung der Prozesse
2. Identifizierung der für die Prozesse benötigten Daten
3. Zusammenfassung und in-Beziehung-Setzung aller Daten

Dieses Verfahren hat den Nachteil, dass es sehr unflexibel gegenüber z.B. Änderungen oder Ergänzungen in der Prozess- und Datenstruktur ist.

Die GB 2 319 863 A beschreibt ein sogenanntes Groupware-System, insbesondere für Internet-Intranet-Anwendungen, mit einer Vielzahl von Client-Anwendungen, die jeweils entsprechende Sichten einer Information bereitstellen. Die Information ist in einer zentralen Objekt-Datenbasis zusammen mit auf die Objekte anwendbaren Prozessen gespeichert. Es ist eine Vielzahl von Maschinen mit Mechanismen vorgesehen, um die in der Datenbasis gespeicherten Objekte zu speichern und zu manipulieren. Dieses System kann vorteilhaft in Computer-Netzwerken verwendet werden, bei denen Programme vom Netzwerk auf die einzelne Netzwerk-Computer heruntergeladen und dort ausgeführt werden, wie z.B. Java-Programme.

Der Aufsatz von Soon-Young Huh: " An object-oriented database model for a change management framework in workgroup computing systems" in Information and Software Technology, Bd. 40, Nr. 2, 25 Mai 1998, Seiten 79-92, offenbart ein Informationsverarbeitungssystem, welches eine zentrale Kommunikationsinstanz zur Verwaltung und Weiterleitung von Informationen eines Datenbestandes umfasst, mindestens ein Master-Informationsverarbeitungssystem, welches über eine Schnittstelle mit der zentralen Kommunikationsinstanz kommuniziert, und der zentralen Kommunikationsinstanz auf Anforderung Informationen zur Verfügung stellt, sowie mindestens ein Client-Informationsverarbeitungssystem, welches über eine Schnittstelle mit der zentralen Kommunikationsinstanz kommuniziert und auf Anforderung Informationen von der zentralen Kommunikationsinstanz erhält. Die von der zentralen Kommunikationsinstanz verwalteten Informationen sind durch ein Objektmodell beschrieben, das ein konzeptionelles Objektmodell umfasst, das den gesamten von den Master- und Client-Informationsverarbeitungssystemen bereitgestellten Datenbestand beschreibt, und den angeschlossenen Systemen zugeordnete und die jeweils spezifischen Dienste in bezug auf das konzeptionelle Objektmodell beschreibende Sichten (Views) beschreibt, welche die Elemente des von der zentralen Kommunikationsinstanz verwaltenden Datenbestands bestimmen, die die betreffenden Systeme kennen.

Der Aufsatz von Dwyer, P. A, et al. " Some Experiences With a Distributed Database Testbed System", in Proceedings of the IEEE, New York, Band 75, Nr. 5, Mai 1987, Seiten 633-648, XP000007273, ISSN 0018-9219, beschreibt ein Testsystem für dezentrale Datenbanken, insbesondere eine Algorithmus zur Verwaltung on Daten, die in mehreren Datenbanken auf verschiedenen Systemen gespeichert sind. Das System umfasst eine Reihe von Applikationsprozessoren (APs) und Datenprozessoren (DPs). Die APs steuern die Schnittstellen zu den Benutzern und die DPs verwalten die Daten der angeschlossenen Datenbanken. Ein Kommunikationssystem, an welchem alle APs und DPs angeschlossen sind, wird zur Datenübertragung zwischen den APs und DPs verwendet. Jedem Benutzer ist ein Datenbankschema in Form einer Benutzersicht (user view) zugeordnet, welche die Sicht des Benutzers auf die Datenbanken definiert, d.h. die Daten, die der Benutzer "sieht" und abrufen kann. Es sind verschiedene Datenbankschemata (Sichten) vorgesehen, für Benutzer, andere Systemeinheiten, etc.

Die Aufgabe der Erfindung besteht darin, ein Informationsverarbeitungssystem und ein Verfahren zu dessen Betrieb vorzuschlagen, mit dem eine Spezifikation und Entwicklung der Schnittstellen zwischen den technischen Anwendungen vereinfacht wird.

Diese Aufgabe wird durch die Merkmale der unabhängigen Patentansprüche gelöst.

Das erfindungsgemäße Informationsverarbeitungssystem umfasst eine zentrale Kommunikationsinstanz (ZDS) zur Verwaltung und Weiterleitung von Informationen eines Datenbestandes, mindestens ein Master-Informationsverarbeitungssystem, welches über eine Schnittstelle mit dem ZDS kommuniziert, und dem ZDS auf Anforderung Informationen zur Verfügung stellt, mindestens ein Client-Informationsverarbeitungssystem, welches über eine Schnittstelle mit dem ZDS kommuniziert und auf Anforderung Informationen vom ZDS erhält. wobei die vom ZDS verwalteten Informationen durch ein Objektmodell beschrieben sind, das ein konzeptionelles Objektmodell (KOM) umfasst, das den gesamten von den Master-und Client-Systemen bereitgestellten Datenbestand beschreibt, und den angeschlossenen Systemen zugeordnete und die jeweils spezifischen Dienste in bezug auf das KOM beschreibende Sichten (Views), welche die Elemente des vom ZDS verwaltenden Datenbestands bestimmen, die die betreffenden Systeme kennen.

Der Erfindung liegt ein objektorientiertes Vorgehen bei der Modellierung der Prozesse zugrunde. Das objektorientierte Vorgehen sieht folgendermaßen aus:
1. Identifizierung von eigenständigen Gegenständen oder abstrakten Einheiten, die sich nach außen durch einheitliche Daten und ein einheitliches Verhalten auszeichnen (Objektidentifizierung)
2. Definition der Daten und Verhaltensmuster dieser Objekte
3. Definition von Prozessen als Interaktion zwischen Objekten

Das objektorientierte Vorgehen hat dabei die Vorteile, dass
- Objekte sich relativ einfach identifizieren lassen, wenn sie sich auf reale Gegenstände beziehen (gilt nicht immer für abstrakte Objekte)
- Objekte in der Regel kleinere, überschaubarere Einheiten sind als Prozesse
- Objekte in der Regel längere Gültigkeit besitzen als Prozesse
- Unterschiedliche Prozesse durch gemeinsam genutzte Objekte eine höhere Integration aufweisen

Darüber hinaus hat das objektorientierte Vorgehen den Vorzug, dass es sich über alle Phasen des Softwareentwicklungsprozesses (Fachkonzeption/Analyse - DV-Konzeption/Entwurf - Implementierung/Realisierung - Betrieb/Wartung) relativ einheitlich anwenden lässt, was bei den klassischen Verfahren nicht der Fall ist.

Vorteilhafte Ausführungsformen und Weiterbildungen der Erfindung sind in den abhängigen Patentansprüchen angegeben.

Vorzugsweise stellt jedes Master-System dem ZDS die in einer zugehörenden Master-Sicht definierten Elemente seines Datenbestandes zur Verfügung, wobei in der Master-Sicht eines angeschlossenen Master-Systems die Elemente des Datenbestands enthalten sind, für die das System die Datenhoheit besitzt.

Gleichzeitig besitzt jedes Client-System über einen Datenzugriffsdienst Zugriff auf die in einer zugehörenden Client-Sicht definierten Daten, wobei in der Client-Sicht eines angeschlossenen Systems die Elemente des Datenbestands enthalten sind, für die das System Informationen vom ZDS abrufen kann.

In einer bevorzugten Ausbildung der Erfindung werden die Sichten für die angeschlossenen Systeme aus dem KOM durch die Operationen Projektion und Selektion gebildet.

Über die Projektion erfolgt eine Auswahl, welche Elemente im Form von Klassen, Attribute, Methoden, Beziehungen des KOM in einer Sicht enthalten sind.

Durch eine Selektion erfolgt eine Auswahl einzelner Objekte einer Klasse. Eine Selektion ist hierbei nur in einer Client-Sicht möglich. Vorzugsweise ist für eine Klasse als Selektionskriterium eine Filterregel definiert, die bestimmt, welche Objekte in der Client-Sicht enthalten sind.

Erfindungsgemäß ist vorgesehen, dass die jeweilige Sicht auf den ZDS die Elemente des KOM bestimmt, die das angeschlossene System kennt, wobei eine Sicht beschrieben wird durch:
- Klassen mit ihren
   Attributen und
   Methoden (inkl. Schnittstelle)
   Selektionskriterien
- Beziehungen
- Konsistenzregeln.

Zur Kommunikation untereinander stehen den angeschlossenen Master- und Client-Systemen durch den ZDS mindestens zwei Kommunikationsmechanismen in Form eines Datenzugriffdienstes und eines Meldungsdienstes zur Verfügung, wobei alle vom ZDS bereitgestellten Dienste als Methoden im Objektmodell definiert sind.

Bei den Diensten können Selektionskriterien angewandt werden, die zusätzlich einschränkend auf die bei den Klassen definierten Kriterien wirken.

Die Datenzugriffsdienste sind sowohl für Client- als auch Master-Systeme definiert.

Die Client-Systeme definieren hierzu die für sie fachlich notwendigen Datenzugriffsdienste, mit denen sie auf die in der Client-Sicht definierten Daten zugreifen wollen.

Aus den Anforderungen der Client-Datenzugriffsdienste können dann Datenzugriffsdienste für die Master-Systeme definiert werden.

Die Meldungsdienste innerhalb des ZDS-Objektmodells sind sowohl in Master- als auch in Client-Sichten definiert. Über die Meldungsdienste werden Änderungen im Datenbestand eines Master-Systems an den ZDS gemeldet, wobei der ZDS diese Änderungen den betroffenen Client-Systemen zur Verfügung stellt.

Generell ist für jedes an den ZDS angeschlossene System eine eigene Klassenkategorie eingerichtet. Dabei kann jede Klassenkategorie selbst wieder zwei Klassenkategorien für Master- und Client-Sichten enthalten.

Die spezielle Klassenkategorie KOM ist in mehrere nach bestimmten Kriterien gebildeten Unterkategorien untergliedert.

Die Klassenkategorien enthalten:
- genau die Klassen (mit Attributen und Methoden) und deren Beziehungen, die in der jeweiligen Sicht sichtbar sind,
- mindestens ein Klassendiagramm, in dem die in der Sicht enthaltenen Klassen veranschaulicht werden,
- zu jeder Operation die Spezifikation der Signatur dieser Methode durch Angabe von Objektstrukturen.

Die Erfindung wird im folgenden anhand eines Ausführungsbeispiels unter Bezugnahme auf mehrere Zeichnungsfiguren näher beschrieben. Aus den Zeichnungen und ihrer Beschreibung ergeben sich weitere Merkmale, Vorteile und Anwendungen der Erfindung. Es zeigt:
- Figur 1:: Übersicht eines ZDS-basierten Informationsverarbeitungssystems;
- Figur 2:: Darstellung der Hierarchie der Klassenkategorien im ZDS-Objektmodell;
- Figur 3:: Definition der Schnittstelle einer Sicht;
- Figur 4:: Baumstruktur für Figur 3;
- Figur 5:: Struktur der Messagedaten;
- Figur 6:: Darstellung einer Update-Message mit alten und neuen Werten.

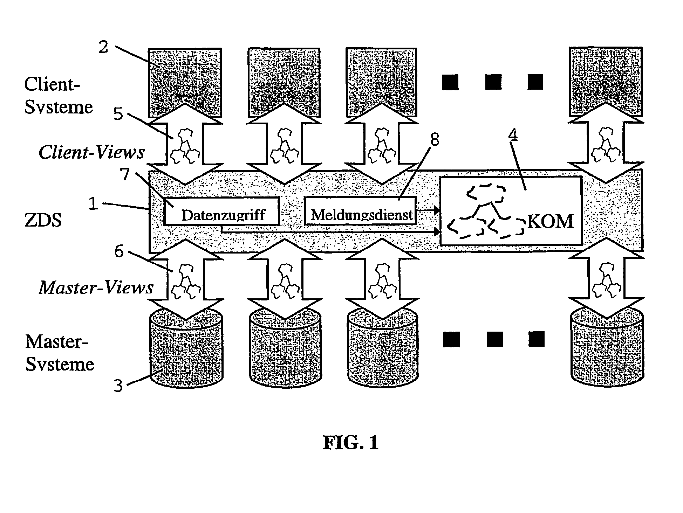

Wie in Figur 1 dargestellt, dient ein Zentraler Datenserver ZDS 1 als zentrale Kommunikationsinstanz zwischen technischen Anwendungen, die als Master-Systeme 3 und/oder Client-Systeme 2 auftreten können. Durch den Einsatz des ZDS 1 wird es möglich, die Kommunikation zwischen diesen Anwendungen mit einheitlichen Verfahren auf Basis einer vereinheitlichten Sicht (View) auf die Daten durchzuführen. Jedes Anwendungssystem 2; 3 benötigt nur noch eine Schnittstelle zum ZDS 1. Es ist nicht mehr notwendig, zwischen je zwei kommunizierenden Systemen eine eigene Schnittstelle zu entwickeln. Dadurch wird der Entwicklungs-und Pflegeaufwand für die Schnittstellen wesentlich verringert.

Der ZDS 1 selbst ist kein Anwendungssystem im eigentlichen Sinn. Er führt selbst keine fachlichen Funktionen aus, bietet keine direkte Benutzerschnittstelle und enthält selbst keine fachlichen Daten. Fachliche Funktionen, Benutzerschnittstellen und fachliche Datenhaltung finden in den einzelnen Anwendungssystemen 2; 3 statt. Der ZDS 1 greift lesend auf die Datenbestände der Anwendungssysteme zu und bietet Dienste an, durch die die Anwendungssysteme auf alle dem ZDS bekannten Datenbestände aller angeschlossenen Anwendungssysteme zugreifen können. Da viele der fachlichen Daten nur im jeweils spezifischen Anwendungssystem bearbeitet werden, wird in der Regel nur ein Teil des Datenbestandes über den ZDS 1 allgemein bekanntgemacht, und zwar der Teil, der auch von anderen Anwendungssystemen für ihre Aufgabenstellung benötigt wird. Die Summe aller über den ZDS 1 zugreifbaren Datenbestände wird in einem gemeinsamen Modell, dem Konzeptionellen Objektmodell (KOM) 4 des ZDS 1 beschrieben.

Die Dienste des ZDS 1 und der Zugang zu ihnen sind für alle angeschlossenen Systeme 2; 3 gleich. Für jedes System werden aber die jeweils spezifischen Dienste in einer besonderen Sicht auf das konzeptionelle Objektmodell 4 des ZDS 1 beschrieben. Diese spezifische Sicht (View) muss jeweils dem System und dem ZDS 1 bekannt sein und wird für jedes System einzeln festgelegt. Jedes angeschlossenere System kann gegenüber dem ZDS 1 in zwei verschiedenen Rollen auftreten: als Master-System 3 und/oder als Client-System 2.

Ein Master-System 3 stellt dem ZDS 1 den in einem jeweiligen Master-View 6 definierten Teil seines Datenbestandes zur Verfügung. Außerdem benachrichtigen die Master-Systeme 3 den ZDS 1 über Änderungen im eigenen Datenbestand.

Ein Client-System 2 nutzt die vom ZDS 1 zur Verfügung gestellten Möglichkeiten zum Zugriff auf die in einem Client-View 5 definierten Daten. Meldungen über Datenänderungen in den in der Client-View 5 enthaltenen Datenbestand können vom Client-System 2 beim ZDS 1 abgeholt werden.

Durch die Entkopplung von Master- 6 und Client-View 5 ist es möglich, dass bestimmte Änderungen an Master-Views 6 keine Auswirkungen auf die Client-Views 5 haben. Dies ist insbesondere der Fall, wenn die Zuständigkeit für einen Datenbestand von einem Master-System 3 auf ein anderes übergeht.

Den angeschlossenen Master- 3 und Client-Systemen 2 stehen durch den ZDS 1 zwei Kommunikationsmechanismen zur Verfügung:

### Datenzugriff und Meldungen.

Der Datenzugriffsdienst des ZDS 1 ermöglicht den Client-Systemen 2 den Zugriff auf die im ZDS 1 definierten Datenbestände. Der daraus resultierende Zugriff auf die für die gewünschten Daten zuständige Master-Systeme 3 ist für die Client-Systeme 2 nicht sichtbar, d.h. die Client-Systeme 2 haben keine Kenntnis, zu welchen Master-Systemen 3 die angeforderten Daten gehören.

Über den Meldungsdienst werden Änderungen im Datenbestand eines Master-Systems 3 an den ZDS 1 gemeldet. Der ZDS 1 stellt diese Änderungen dann den betroffenen Client-Systemen 2 zur Verfügung.

Die folgende Tabelle zeigt, welche Informationen für Datenzugriffs- und Meldungsdienst in den Master- und Client-Views enthalten sind:

**Tabelle 1: Inhalte der Views auf den ZDS**

| | *Datenzugriffsdienst* | *Meldungsdienst* |
|---|---|---|
| *Client-View* | welche Daten kann das Client-System abfragen | an welchen Meldungen über Änderungen des Datenbestands ist das Client-System interessiert |
| *Master-View* | für welche Daten besitzt das Master-System die Datenhoheit | welche Änderungen des Datenbestands werden an den ZDS gemeldet |

Nachfolgend werden einige verwendete Begriffe aus dem Gebiet der Objektorientierung erläutert.

### Assoziation

Eine Assoziation ist die allgemeinste Form einer Beziehung zwischen Klassen. Sie beschreibt Semantik und Struktur einer Menge von Objektbeziehungen.

Die Kardinalität der Assoziation bestimmt, wieviele Objekte der in Bezug stehenden Klassen an einer Assoziation beteiligt sind.

Durch Angabe von Rollennamen wird die Semantik der Beziehung beschrieben, d.h. in welcher Rolle sehen Objekte der einen Klasse die Objekte der anderen Klasse. Wenn eine Assoziation über eigene Attribute verfügt, dann handelt es sich um eine attributisierte Assoziation.

### Attribut

Ein Attribut ist ein Datenelement, dass in jedem Objekt einer Klasse enthalten ist und in jedem Objekt einen individuellen Wert haben kann.

Ein Attribut wird beschrieben durch seinen Namen und seinen Typ.

Identifizierende Attribute zeichnen sich dadurch aus, dass sie ein Objekt eindeutig bestimmen, d.h. es gibt kein anderes Objekt mit den gleichen identifizierenden Attributen.

### Has-Beziehung

Die Has-Beziehung oder Aggregation ist eine besondere Form der allgemeineren Assoziationsbeziehung. Die beteiligten Klassen beschreiben eine Ganzes/Teil-Hierarchie, d.h. eine Aggregation beschreibt, wie sich etwas Ganzes aus seinen Teilen zusammensetzt.

### Klasse

Eine Klasse ist eine Menge von Objekten, die eine gemeinsame Struktur und ein gemeinsames Verhalten aufweisen. Die Struktur einer Klasse wird beschrieben durch die Attribute und Beziehungen zu anderen Klassen, das Verhalten durch die Operationen einer Klasse.

### Klassenkategorie

Klassenkategorien werden verwendet, um das logische Modell aufzuteilen. Eine Klassenkategorie kann Klassen und andere Klassenkategorien enthalten. Sie enthält jedoch, im Gegensatz zu einer Klasse, direkt keine Operationen oder Zustände des Modells.

### Objektbeziehung

Eine Objektbeziehung (Link) ist eine konkrete Beziehung zwischen Objekten. Sie ist eine Instanz einer Assoziation.

### Objekt

Ein Objekt ist eine konkret vorhandene Einheit, es hat einen Status, ein Verhalten und eine Identität. Jedes Objekt ist ein Exemplar (Instanz) einer Klasse. Die Information eines Objekts wird repräsentiert durch Attribute, deren Struktur in der Klasse definiert ist. Das Verhalten wird bestimmt durch die in der Klasse definierten Operationen und ist für alle Objekte einer Klasse gleich.

### Vererbungsbeziehung

Die Vererbung ist eine Beziehung zwischen Klassen, wobei die eine Klasse (Sub-oder Unterklasse) die Struktur und das Verhalten der anderen Klasse (Super- oder Oberklasse) teilt. Die Unterklasse ist eine spezialisierte Art der Oberklasse.

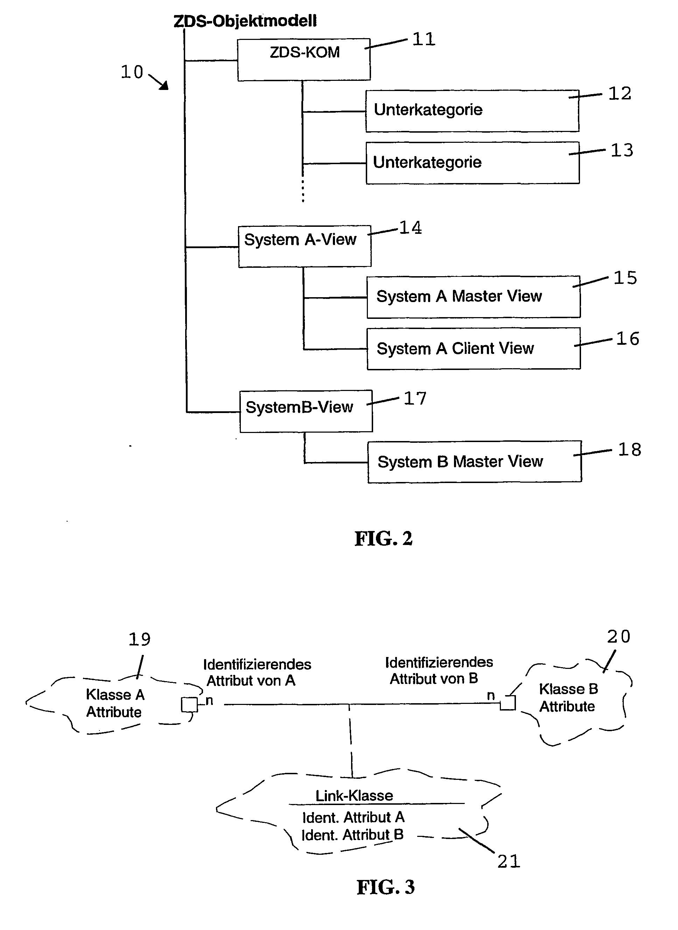

Figur 2 zeigt den Aufbau des ZDS-Objektmodells 10 und die Regeln, nach denen die Sichten 5, 6 der angeschlossenen Systeme 2; 3 gebildet werden.

Das ZDS-Objektmodell 10 besteht aus dem Konzeptionellen Objektmodell (KOM) 4 und den Sichten 5, 6 (Views) der angeschlossenen Systeme. Daher wurde das Gesamtmodell in mehrere Kategorien aufgeteilt, wobei für jedes an den ZDS 1 angeschlossene System eine Kategorie 11, 14 ,17 vorgesehen wird.

Es gibt eine Kategorie ZDS-KOM 11, die das KOM 4 enthält. Das KOM 4 selbst ist wiederum gegliedert in mehrere nach fachlichen Kriterien gebildeten Unterkategorien 12 ,13. Ferner bilden die angeschlossenen Systeme, z.B. System A und System B, jeweils eine Kategorie 14, 17, wobei der Name der Kategorie, die die Sicht des angeschlossenen Systems auf den ZDS 1 beinhaltet, z.B. das Postfix "View" zugeteilt bekommt (z.B. System A-View).

Jedes angeschlossene System kann gegenüber dem ZDS 1 als Master- 3 und/oder als Client-System 2 auftreten. Daher werden in den Kategorien 14, 17 entsprechend der Rolle des Systems die Unterkategorien Master-View 15 bzw. 18 und Client-View 16 angelegt.

Daraus ergibt sich z.B. für das ZDS-Objektmodell 10 bei den angeschlossenen Systemen "System A" 14 und "System B" 17 die in Figur 2 gezeigte Hierarchie von Klassenkategorien.

Die Sicht 5, 6 (View) auf den ZDS 1 bestimmt die Elemente des KOM 4, die das angeschlossene System kennt. Sie wird beschrieben durch die darin enthaltenen
- Klassen mit ihren
   Attributen und
   Methoden (inkl. Schnittstelle)
   Selektionskriterien
- Beziehungen
- Konsistenzregeln

In der Master-View 6 eines angeschlossenen Systems sind die Elemente enthalten, für die das System der "Master" ist, d.h. für die das System die Datenhoheit besitzt. Hierzu wird für jede Klasse ein primäres Master-System definiert. Dieses ist zuständig für die identifizierenden Attribute der Klasse, in vielen Fällen auch für alle anderen Attribute. Wenn jedoch für andere Attribute weitere Systeme verantwortlich sind, dann werden diese Systeme als sekundäres Master-System bezeichnet. In den Master-Views der sekundären Master-Systeme sind neben den "eigenen" Attributen zusätzlich die identifizierenden Attribute der Klasse enthalten.

In der Client-View 5 eines angeschlossenen Systems sind die Elemente enthalten, für die das System Informationen vom ZDS erhalten will.

Die Views 5, 6 für die angeschlossenen Systeme können nicht beliebig aus dem KOM 4 gebildet werden. Erlaubt sind die Operationen Projektion und Selektion. Andere Operationen als Selektion und Projektion sind nicht möglich! Es gibt z.B. keine Join-Operation, durch die mehrere Klassen des KOM 4 auf eine Klasse eines ZDS-Client-Views 5 abgebildet werden.

Über eine Projektion wird ausgewählt, welche Elemente (Klassen, Attribute, Methoden, Beziehungen) des KOM 4 in einer View 5, 6 enthalten sind. Alle anderen Elemente des KOM 4 werden durch die Projektion ausgeblendet.

Eine Selektion ist nur in einer Client-View 5 möglich. Durch eine Selektion können einzelne Objekte einer Klasse ausgewählt werden. Hierzu kann für eine Klasse als Selektionskriterium eine Filterregel angegeben werden, die bestimmt, welche Objekte in der Client-View 5 enthalten sind.

Die Filterregeln werden bei den Klassen des Client-Views 5 definiert. Sie werden z.B. in einer an die SQL-Sprache angelehnten Syntax angegeben.

Als Filterattribute werden die Attribute bezeichnet, die für die Auswertung von Filterregeln notwendig sind.

Bezüglich Konsistenz im ZDS 1 gelten die folgenden Definitionen:
- Der ZDS 1 geht davon aus, dass zu jedem Zeitpunkt die Daten innerhalb eines Master-Systems 3 konsistent sind.
- Konsistenzbedingungen, die über Master-System-Grenzen hinausgehen, müssen fachlich spezifiziert sein.
- Attribute, die zur Bewertung der Konsistenzbedingungen nötig sind, müssen im KOM 4 enthalten sein.
- Konsistenzbedingungen können in Client Views 5 definiert werden.
- Durch die Weitergabe von Daten durch den ZDS 1 darf sich die Konsistenz dieser Daten nicht vermindern.

Konsistenzregeln sind (im Gegensatz zu Filterregeln) auf der Basis eines Client-Views 5 definiert, d.h. dies entspricht der logischen Definition, dass ein Client-View 5 in sich konsistent sein muss.

Sind keine Konsistenzregeln auf den Client-Views 5 definiert, so wird davon ausgegangen, das die entsprechenden Daten immer konsistent zueinander sind. Als Konsistenzattribute werden die Attribute bezeichnet, die für die Auswertung von Konsistenzregeln notwendig sind.

Die Syntax der Konsistenzregeln entspricht der Syntax der Filterregeln

Wie bereits weiter oben beschrieben, wird für jedes an den ZDS 1 angeschlossene System eine eigene Klassenkategorie modelliert, die selbst wieder zwei Klassenkategorien für Master- 6 und Client-View 5 enthalten kann.

Diese Kategorien enthalten:
- genau die Klassen (mit Attributen und Methoden) und deren Beziehungen, die in dem jeweiligen View sichtbar sind, wobei die Klassennamen nach den obigen Namenskonventionen gebildet sind,
- mindestens ein Klassendiagramm, in dem die in der View enthaltenen Klassen veranschaulicht werden,
- zu jeder Operation die Spezifikation der Signatur dieser Methode durch Angabe von Objektstrukturen spezifiziert wird.

Durch die Abbildung dieser Informationen ins ZDS-Objektmodell 10 wird es möglich, eine komplette Dokumentation des Objektmodells zu erstellen, die den funktionalen Teil des Fachkonzepts bildet. Außerdem ist es möglich, mit diesen Informationen Konfigurationsdateien zu erstellen, die in der ZDS-Anwendung zur Abbildung des KOM 4 auf die verschiedenen Views 5, 6 verwendet werden.

In den folgenden Abschnitten wird festgelegt, wie die beiden Regeln zur Bildung von Views 5, 6 (Projektion und Selektion) und die Spezifikation der Schnittstelle von Operationen im ZDS-Objektmodell 10 abgebildet werden.

Die Projektion für Klassen und Beziehungen erfolgt dadurch, dass in den Klassenkategorien der Views 5, 6 nur die Klassen und Beziehungen enthalten sind, die zu dem View gehören.

In diesen Klassen sind nur die Attribute und Operationen vorhanden, die zum View gehören. Hierbei gilt, dass die Attribute in den Klassen der View den gleichen Namen und Typ haben, wie die Attribute der entsprechenden Klasse des KOM 4. Bei den Operationen gilt analog Gleichheit von Namen und Schnittstelle.

Zu den in der View enthaltenen Elementen können View-spezifische Beschreibungen in dem "Documentation"-Feld des jeweiligen Spezifikationsdialogs angegeben werden.

Die Selektion, d.h. eine zusätzliche Filterung, lässt sich in der Booch-Notation nicht ausdrücken. Im Rose-Modell werden daher die Selektionskriterien in dem Property 'Selektionskriterium' der zum View gehörenden Klasse angegeben.

Konsistenzregeln werden auf Basis einer Client-View 5 definiert. Daher werden die Konsistenzregeln im Rose-Modell in dem Property 'Konsistenzregel' der Client-View-Kategorie abgebildet.

Vom ZDS 1 werden verschiedene Arten von Diensten (Services) bereitgestellt:
- Retrieve-Services zur Nutzung des Datenzugriffsdienstes
- Message-Services zur Nutzung des Meldungsdienstes

Alle Services werden grundsätzlich als Methoden im Objektmodell 10 abgebildet. Für diese Methoden werden keine Aufrufparameter definiert, diese sind durch die vorhandenen C-API-Funktionen definiert.

Bei Services können ebenfalls Selektionskriterien angegeben werden. Sie wirken zusätzlich einschränkend auf die bei den Klassen definierten Kriterien. Definiert werden sie in dem Property 'Selektionskriterium' der betreffenden Methode.

Um den geltenden Regeln zur Bildung von Client- und Master-Views 5, 6 gerecht zu werden, müssen die Methoden auch im KOM 4 an den entsprechenden Klassen modelliert werden.

Für beide Arten von Services werden an der Schnittstelle komplexe Baumstrukturen übergeben. Deren Aufbau muss zur Erstellung des Fachkonzepts für jeden Service spezifisch definiert werden.

Diese Datenstrukturen müssen auf die jeweilige View abbildbar sein, d.h.
- Es dürfen nur bekannte Klassen, Attribute und Relationen benutzt werden.
- Referenzen auf Unterobjekte können gebildet werden aus Has-Beziehungen und Assoziationen, wobei der Name der Referenz dem Namen der Has-Beziehung bzw. dem Rollennamen der Assoziation entspricht.
- Die Kardinalität einer Beziehung bestimmt, ob es sich um ein einzelnes Objekt (Kardinalität <= 1) oder um eine Liste von Objekten handelt (Kardinalität > 1)

Hier gibt es jedoch eine Ausnahme:
Wenn sicher ist, dass durch die Auswertung von Selektionskriterien bei einer Beziehung mit Kardinalität > 1 genau ein Objekt geliefert wird, dann kann dies in der Datenstruktur durch Angabe eines einzelnen Objektes dargestellt werden.
- In der View vorhandene attributisierte Assoziationen werden aufgelöst, wie dies in Figur 3 unter Verwendung der Booch-Notation dargestellt ist.

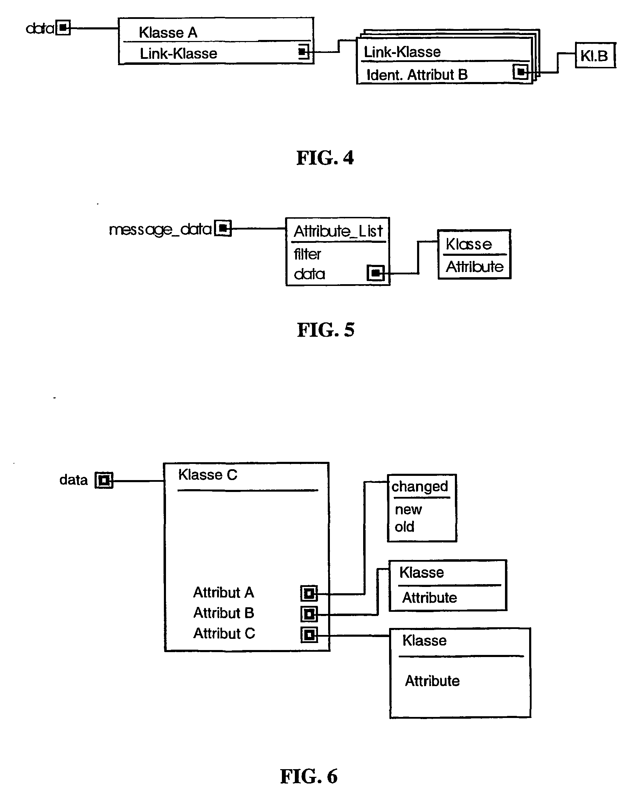

Die zugehörige Baumstruktur zeigt Figur 4. Von Klasse A 19 aus kann über den Klassennamen der Link-Klasse 21 zu dieser navigiert werden, wobei die Kardinalität der Beziehung auf der seitens der Klasse B bestimmt, ob von der Link-Klasse ein oder mehrere Objekte vorhanden sind. Von der Link-Klasse aus kann dann über den Rollennamen (Identifizierendes Attribut B) zur Klasse B 20 navigiert werden (Figur 3)

Datenzugriffsdienste (Retrieve-Services) werden für Client- 2 und Master-Systeme 3 definiert. Client-Systeme 2 definieren die für sie fachlich notwendigen Retrieve-Services, mit denen sie auf die in der Client-View 5 definierten Daten zugreifen wollen.

Aus den Anforderungen der Client-Retrieve-Services werden Retrieve-Services für die Master-Syteme 3 definiert. Diese nutzt der Datenzugriffsdienst zur Ermittlung der Daten, die von den Client-Systemen 2 angefordert werden.

Im Objektmodell werden Retrieve-Services als Klassenmethoden der jeweiligen Klasse modelliert.

Nachrichtendienste (Message-Services) werden innerhalb des ZDS-Objektmodells 10 sowohl in Master- 6 als auch in Client-Views 5 definiert. In einem Master-View 6 werden die Messages definiert, die das Master-System 3 an den ZDS 1 sendet.

In einem Client-View 5 werden die Messages definiert, die vom ZDS 1 an das Client-System 2 gesendet werden.

Eine Message wird als Methode der jeweiligen Klasse definiert.

Client-Systeme erhalten nur Messages, die für sie interessant sind, d.h. die den Datenbestand des jeweiligen Clients betreffen. Hierzu müssen bei der Verarbeitung die Selektionskriterien beachtet werden.

Zu einer Message gehören folgende Angaben:
- eine eindeutige Message-Id,
- die Angabe, für welche Client-View 5 die Message bestimmt ist (Argument 'userview'),
- einen Messagetyp (Argument 'message'),
- den Zeitpunkt, an dem die in der Message enthaltenen Daten gültig sind,
- die Angabe, von welchem Master-System 3 die Message gesendet wurden und
- die Messagedaten (in Form einer ZDS_OEDATA-Datenstruktur)
- Messagetypen

Es existieren folgende Arten von Messagetypen:
- *New*: vergleichbar mit einer Konstruktor-Methode einer Klasse
- *Update*: vergleichbar mit einer 'normalen' Methode einer Klasse
- *Delete*: vergleichbar mit einer Destruktor-Methode einer Klasse

Figur 5 stellt die Grundstruktur der Messagedaten da. Bei der Verarbeitung einer Message in der CM-Komponente müssen dort die Mesagedaten gelesen werden.

In der Datenstruktur (Funktionsparameter 'message_data') sind maximal zwei Einträge enthalten:
- Ein boolescher Wert `filter' und
- eine ZDS_OEDATA-Datenstruktur 'data'

Der Wert 'filter' ist in jeder Update-Message vorhanden, die an ein Client-System 2 gesendet wird, und enthält den Wert, der bei der Auswertung der Filterregel ermittelt wurde. Wenn beim Client 2 keine Filterregel definiert wurde, ist der Wert TRUE eingetragen. Das Ergebnis der Filterregel ist für die Behandlung von Update-Messages auf Client-Seite erforderlich.

Die Unterstruktur 'data' ist in jeder Message enthalten, sowohl in den Messages für die Client-Systeme 2 als auch in den Messages, die von den Master-Systemen 3 an den ZDS 1 gesendet werden. Der Aufbau der Unterstruktur ist abhängig von der jeweiligen Spezifikation der Message.

In einem Client-System 2 entspricht der Aufbau von 'data' genau den Elementen, die das Client-System 2 erhalten möchte. Aus den Anforderungen verschiedener Client-Systeme 2 für einen bestimmten Messagetyp einer Klasse ergibt sich der Aufbau der entsprechenden Message im Master-System 3: Deren 'data'-Struktur muss so definiert sein, dass darin alle Informationen dieses Masters enthalten sind, die zu dieser Message gehören.

Der Inhalt der Unterstruktur 'data' ist abhängig vom Messagetyp:
- Messagetyp *New:* 'data' enthält die Daten des neuen Objekts.
- Messagetyp *Update:* 'data' enthält die neuen Daten des Objekts.
- Messagetyp *Delete:* 'data' enthält die Daten des zu löschenden Objekts.

Bei der Spezifikation einer Update-Message in einer Master-View 6 kann zusätzlich angegeben werden, ob auch die alten Werte geliefert werden. Diese Angabe wird in der Master-View 6 in dem ZDS-Property 'Messagedaten Master' der jeweiligen Methode angegeben.

Bei der Spezifikation einer Update-Message in einer Client-View 5 kann zusätzlich angegeben werden,
- ob das Client-System 2 auch die alten Werte erhalten möchte und
- ob das Client-System 2 an allen Werte oder nur an den geänderten Werte interessiert ist.

Diese Angabe wird in der Client-View 5 in dem ZDS-Property 'Messagedaten Client' der jeweiligen Methode angegeben.

Wie in Figur 6 dargestellt ist, werden in Update-Messages, falls vorhanden, alte Werte folgendermaßen dargestellt: Statt des eigentlichen Attributwerts befindet sich in der Datenstruktur ein Objekt der Klasse 'changed'. Dieses Objekt hat die Attribute 'new' und 'old', die den neuen bzw. alten Attributwert beinhalten.

Die Klasse 'changed' wird eigens für diesen Zweck definiert. Sie wird zwar bei der Definition der Messagedaten-Struktur nicht verwendet, ist jedoch, falls die alten Werte geliefert werden, in der Datenstruktur enthalten.

Das Beispiel gemäss Figur 6 zeigt die Datenstruktur für den Fall, dass das Attribut A der Klasse C geändert wurde:

### Zeichnungslegende

- 1: Zentraler Datenserver (ZDS)
- 2: Client-System
- 3: Master-System
- 4: Konzeptionelles Objektmodell (KOM)
- 5: Client-Sicht (View)
- 6: Master-Sicht (View)
- 7: Datenzugriff
- 8: Meldungsdienst

- 10: ZDS-Objektmodell
- 11: Kategorie (ZDS.-KOM)
- 12: Unterkategorie
- 13: Unterkategorie
- 14: Kategorie (View)
- 15: Unterkategorie (Master-View)
- 16: Unterkategorie (Cient-View)
- 17: Kategorie (View)
- 18: Unterkategorie (Master-View)
- 19: Klasse
- 20: Klasse
- 21: Link-Klasse

## Patentansprüche

1. Informationsverarbeitungssystem für den Datenaustausch zwischen mehreren technischen Anwendungssystemen, die als Master-Informationsverarbeitungssysteme (3) und/oder Client-Informationsverarbeitungssysteme (2) auftreten können, welches umfasst:
eine zentrale Kommunikationsinstanz ZDS (1) zur Verwaltung und Weiterleitung von Informationen eines Datenbestandes,
mindestens ein Master-Informationsverarbeitungssystem (3), welches über eine Schnittstelle mit dem ZDS (1) kommuniziert und dem ZDS (1) auf Anforderung Informationen zur Verfügung stellt, die auf dem Master-Informationsverarbeitungssystem gespeichert sind, wobei jedes Master-Informationsverarbeitungssystem (3) dem ZDS (1) die in einer zugehörenden Master-Sicht (6) definierten Elemente seines Datenbestandes zur Verfügung stellt,
mindestens ein Client-Informationsverarbeitungssystem (2), welches über eine Schnittstelle mit dem ZDS (1) kommuniziert und auf Anforderung Informationen vom ZDS (1) erhält, wobei das mindestens eine Master-Informationsverarbeitungssystem (3) und das mindestens eine Client-Informationsverarbeitungssystem (2) ein über die zentrale Kommunikationsinstanz ZDS (1) miteinander verbundenes System bilden, und
jedes Client-Informationsverarbeitungssystem (2) über einen Datenzugriffsdienst Zugriff auf die in einer zugehörenden Client-Sicht (5) definierten Datenbestände besitzt, wobei der ZDS (1) lesend auf die Datenbestände der Master- und Client-Informationsverarbeitungssysteme (2, 3) zugreift und Dienste anbietet, durch die die Master- und Client-Informationsverarbeitungssysteme (2, 3) auf alle dem ZDS (1) bekannten Datenbestände aller angeschlossenen Master- und Client-Informationsverarbeitungssysteme (2, 3) zugreifen können,
wobei die vom ZDS (1) verwalteten Informationen durch ein Objektmodell (10) beschrieben sind, das ein konzeptionelles Objektmodell KOM (4) umfasst, das den gesamten von den Master- und Client-Informationsverarbeitungssystemen (2; 3) bereitgestellten Datenbestand beschreibt, und den angeschlossenen Systemen zugeordnete Sichten (5; 6) (Views) beschreibt, die jeweils spezifischen Dienste in bezug auf das KOM (4) beschreiben und die Elemente des vom ZDS (1) verwaltenden Datenbestands bestimmen, die die betreffenden,
angeschlossenen Master- und Client-Informationsverarbeitungssysteme (2; 3) kennen, wobei die Sichten (5; 6) für die angeschlossenen Systeme aus dem gesamten Datenbestand des KOM (4) durch Operationen Projektion und
Selektion gebildet werden, wobei über die Projektion eine Auswahl erfolgt,
welche Elemente in Form von Klassen, Attributen, Methoden, Beziehungen des KOM (4) in einer Sicht (5; 6) enthalten sind, und durch eine Selektion eine Auswahl einzelner Objekte einer Klasse erfolgt.

2. Informationsverarbeitungssystem nach Anspruch 1, **dadurch gekennzeichnet, dass** in der Master-Sicht (6) eines angeschlossenen Master-Systems (3) die Elemente des Datenbestands enthalten sind, für die das Master-Informationsverarbeitungssystem der Master ist und die Datenhoheit besitzt.

3. Informationsverarbeitungssystem nach einem oder mehreren der vorhergehenden Ansprüche, **dadurch gekennzeichnet, dass** in der Client-Sicht (5) eines angeschlossenen Client-Informationsverarbeitungssystems (2) die Elemente des Datenbestands enthalten sind, für die das Client-Informationsverarbeitungssystem Informationen vom ZDS (1) abrufen kann.

4. Informationsverarbeitungssystem nach einem oder mehreren der vorhergehenden Ansprüche, **dadurch gekennzeichnet, dass** eine Selektion nur in einer Client-Sicht (5) möglich ist.

5. Informationsverarbeitungssystem nach einem oder mehreren der vorhergehenden Ansprüche, **dadurch gekennzeichnet, dass** für eine Klasse als Selektionskriterium eine Filterregel definiert wird, die bestimmt, welche Objekte in der Client-Sicht (5) enthalten sind.

6. Informationsverarbeitungssystem nach einem oder mehreren der vorhergehenden Ansprüche, **dadurch gekennzeichnet, dass** die jeweilige Sicht (5; 6) auf den ZDS (1) die Elemente des KOM (4) bestimmt, die das angeschlossene Master- oder Client-Informationsverarbeitungssystem (2; 3) kennt, wobei eine Sicht (5; 6) beschrieben wird durch:
- Klassen mit ihren
Attributen und
Methoden (inkl. Schnittstelle)
Selektionskriterien
- Beziehungen
- Konsistenzregeln.

7. Informationsverarbeitungssystem nach einem oder mehreren der vorhergehenden Ansprüche, **dadurch gekennzeichnet, dass** den angeschlossenen Master- und Client-Informationsverarbeitungssystemen (2; 3) durch den ZDS (1) mindestens zwei Kommunikationsmechanismen in Form eines Datenzugriffdienstes und eines Meldungsdienstes zur Verfügung gestellt werden.

8. Informationsverarbeitungssystem nach einem oder mehreren der vorhergehenden Ansprüche, **dadurch gekennzeichnet, dass** alle vom ZDS (1) bereitgestellten Dienste als Methoden im Objektmodell definiert sind.

9. Informationsverarbeitungssystem nach einem oder mehreren der vorhergehenden Ansprüche, **dadurch gekennzeichnet, dass** bei den Diensten Selektionskriterien angewandt werden, die zusätzlich einschränkend auf die bei den Klassen definierten Kriterien wirken.

10. Informationsverarbeitungssystem nach einem oder mehreren der vorhergehenden Ansprüche, **dadurch gekennzeichnet, dass** Datenzugriffsdienste für Client- und Master-Informationsverarbeitungssysteme (2; 3) definiert sind.

11. Informationsverarbeitungssystem nach einem oder mehreren der vorhergehenden Ansprüche, **dadurch gekennzeichnet, dass** Client-Informationsverarbeitungssysteme (2), die für sie fachlich notwendigen Datenzugriffsdienste definieren, mit denen sie auf die in der Client-Sicht (5) definierten Daten zugreifen wollen.

12. Informationsverarbeitungssystem nach einem oder mehreren der vorhergehenden Ansprüche, **dadurch gekennzeichnet, dass** aus den Anforderungen der Glient-Datenzugriffsdienste Datenzugriffsdienste für die Master-Informationsverarbeitungssysteme (3) definiert werden.

13. Informationsverarbeitungssystem nach einem oder mehreren der vorhergehenden Ansprüche, **dadurch gekennzeichnet, dass** über den Meldungsdienst Änderungen im Datenbestand eines Master-Informationsverarbeitungssystems (3) an den ZDS (1) gemeldet werden und der ZDS (1) diese Änderungen den betroffenen Client-Informationsverarbeitungssystemen (2) zur Verfügung stellt.

14. Informationsverarbeitungssystem nach einem oder mehreren der vorhergehenden Ansprüche, **dadurch gekennzeichnet, dass** die Meldungsdienste innerhalb des ZDS-Objektmodells (10) sowohl in Master- als auch in Client-Sichten (5; 6) definiert sind.

15. Informationsverarbeitungssystem nach einem oder mehreren der vorhergehenden Ansprüche, **dadurch gekennzeichnet, dass** für jedes an den ZDS (1) angeschlossene Master- oder Clientinformationsverarbeitungssystem (2; 3) eine eigene Klassenkategorie eingerichtet ist.

16. Informationsverarbeitungssystem nach einem oder mehreren der vorhergehenden Ansprüche, **dadurch gekennzeichnet, dass** jede Klassenkategorie selbst wieder zwei Klassenkategorien für Master- und Client-Sichten (5; 6) enthalten kann.

17. Informationsverarbeitungssystem nach einem oder mehreren der vorhergehenden Ansprüche, **dadurch gekennzeichnet, dass** die Klassenkategorie KOM (11) in mehrere nach bestimmten Kriterien gebildeten Unterkategorien (12; 13) untergliedert ist.

18. Informationsverarbeitungssystem nach einem oder mehreren der vorhergehenden Ansprüche, **dadurch gekennzeichnet, dass** die Klassenkategorien enthalten:
genau die Klassen (mit Attributen und Methoden) und deren Beziehungen, die in der jeweiligen Sicht (5; 6) sichtbar sind,
mindestens ein Klassendiagramm, in dem die in der Sicht (5; 6) enthaltenen Klassen veranschaulicht werden,
zu jeder Operation die Spezifikation der Signatur dieser Methode durch Angabe von Objektstrukturen.

19. Verfahren zum Betrieb eines Informationsverarbeitungssystems für den Datenaustausch zwischen mehreren technischen Anwendungssystemen, die als Master-Informationsverarbeitungssysteme (3) und/oder Client-Informationsverarbeitungssysteme (2) auftreten können,
**gekennzeichnet durch**:
Bereitstellung einer zentralen Kommunikationsinstanz ZDS (1) zur Verwaltung und Weiterleitung von Informationen eines Datenbestandes,
Bereitstellung mindestens eines Master-Informationsverarbeitungssystems (3), welches über eine Schnittstelle mit dem ZDS (1) kommuniziert, und dem ZDS (1) auf Anforderung Informationen zur Verfügung stellt, die auf dem Master-Informationsverarbeitungssystem gespeichert sind, welches über eine Schnittstelle mit dem ZDS (1) kommuniziert (S.2, Z.3-4), wobei jedes Master-Informationsverarbeitungssystem (3) dem ZDS (1) die in einer zugehörenden Master-Sicht (6) definierten Elemente seines Datenbestandes zur Verfügung stellt,
Bereitstellung mindestens eines Client-Informationsverarbeitungssystems (2),
welches über eine Schnittstelle mit dem ZDS (1) kommuniziert und auf Anforderung Informationen vom ZDS (1 )erhält, wobei das mindestens eine Master-Informationsverarbeitungssystem (3) und das mindestens eine Client-Informationsverarbeitungssystem (2) ein über die zentrale Kommunikationsinstanz ZDS (1) miteinander verbundenes System bilden,
und jedes Client-Informationsverarbeitungssystem (2) über einen Datenzugriffsdienst Zugriff auf die in einer zugehörenden Client-Sicht (5) definierten Datenbestände besitzt, wobei der ZDS (1) lesend auf die Datenbestände der Master- und Client-Informationsverarbeitungssysteme (2, 3) zugreift und Dienste anbietet, **durch** die die Master und Client-Informationsverarbeitungssysteme (2, 3) auf alle dem ZDS (1) bekannten Datenbestände aller angeschlossenen Master und Client-Informationsverarbeitungssysteme (2, 3) zugreifen können wobei die vom ZDS (1) verwalteten Informationen in ein Objektmodell (10) gegliedert sind,
das ein konzeptionelles Objektmodell KOM (4) umfasst, das den gesamten von den Master- und Client-Informationsverarbeitungssystemen (2; 3) bereitgestellten Datenbestand beschreibt, und den angeschlossenen Systemen zugeordnete Sichten (5; 6) (Views) beschreibt, die jeweils spezifischen Dienste in bezug auf das KOM (4) (Views) beschreiben, welche die Elemente des vom ZDS (1) verwaltenden Datenbestands bestimmen, die die betreffenden, angeschlossenen Master- und Client-Informationsverarbeitungssysteme (2; 3) kennen, wobei die Sichten (5; 6) für die angeschlossenen Systeme aus dem KOM (4) **durch** Operationen Projektion und Selektion gebildet werden, wobei über die Projektion eine Auswahl erfolgt, welche Elemente in Form von Klassen, Attributen, Methoden,
Beziehungen des KOM (4) in einer Sicht (5; 6) enthalten sind, und **durch** eine Selektion eine Auswahl einzelner Objekte einer Klasse erfolgt.

## Claims

1. Information processing system for data exchange between a plurality of technical application systems which can occur as master information processing systems (3) and/or client information processing systems (2), which comprises:
a central communications instance CDS (1) for the management and forwarding of information of a data stock, at least one master information processing system (3) which communicates with the CDS (1) via an interface and makes information which is stored on the master information processing system available to the CDS (1) on request, wherein each master information processing system (3) makes the elements of its data stock defined in an associated master view (6) available to the CDS (1),
at least one client information processing system (2) which communicates with the CDS (1) via an interface and receives information from the CDS (1) on request, wherein the at least one master information processing system (3) and the at least one client information processing system (2) form a system connected to each other via the central communications instance CDS (1), and each client information processing system (2) has access via a data access service to the data stocks defined in an associated client view (5), wherein the CDS (1) has read access to the data stocks of the master and client information processing systems (2, 3) and provides services by which the master and client information processing systems (2, 3) can access all of the data stocks of all connected master and client information processing systems (2, 3) known to the CDS (1),
wherein the information managed by the CDS (1) is described by an object model (10) comprising a conceptual object model COM (4) which describes the whole of the data stock provided by the master and client information processing systems (2; 3), and describing views (5; 6) which are associated with the connected systems, describe the specific services in relation to the COM (4) and determine the elements of the data stock managed by the CDS (1) which are known to the connected master and client information processing systems (2; 3) concerned, wherein the views (5; 6) for the connected systems are formed from the whole of the data stock of the COM (4) by operations of projection and selection, wherein by means of the projection a choice is made as to which elements in the form of classes, attributes, methods, relationships of the COM (4) are contained in a view (5; 6), and by means of a selection a choice of individual objects of a class is made.

2. Information processing system according to claim 1, **characterised in that** in the master view (6) of a connected master system (3) are contained the elements of the data stock for which the master information processing system is the master and has data sovereignty.

3. Information processing system according to one or more of the preceding claims, **characterised in that** in the client view (5) of a connected client information processing system (2) are contained the elements of the data stock for which the client information processing system can retrieve information from the CDS (1).

4. Information processing system according to one or more of the preceding claims, **characterised in that** a selection is possible only in a client view (5).

5. Information processing system according to one or more of the preceding claims, **characterised in that** a filter rule which determines which objects are contained in the client view (5) is defined as the selection criterion for a class.

6. Information processing system according to one or more of the preceding claims, **characterised in that** the respective view (5; 6) of the CDS (1) determines the elements of the COM (4) which are known to the connected master or client information processing system (2; 3), wherein a view (5; 6) is described by:
- classes with their
attributes and
methods (incl. interface)
selection criteria
- relationships
- rules of consistency.

7. Information processing system according to one or more of the preceding claims, **characterised in that** at least two communication mechanisms in the form of a data access service and a message service are made available to the connected master and client information processing systems (2; 3) by the CDS (1).

8. Information processing system according to one or more of the preceding claims, **characterised in that** all of the services provided by the CDS (1) are defined as methods in the object model.

9. Information processing system according to one or more of the preceding claims, **characterised in that** selection criteria which additionally have a limiting effect on the criteria defined in the case of the classes are applied in the case of the services.

10. Information processing system according to one or more of the preceding claims, **characterised in that** data access services for client and master information processing systems (2; 3) are defined.

11. Information processing system according to one or more of the preceding claims, **characterised in that** client information processing systems (2) define the data access services which are technically necessary for them and with which they wish to access the data defined in the client view (5).

12. Information processing system according to one or more of the preceding claims, **characterised in that** from the requirements of the client data access services, data access services for the master information processing systems (3) are defined.

13. Information processing system according to one or more of the preceding claims, **characterised in that**, by means of the message service, changes in the data stock of a master information processing system (3) are reported to the CDS (1) and the CDS (1) makes these changes available to the client information processing systems (2) concerned.

14. Information processing system according to one or more of the preceding claims, **characterised in that** the message services are defined within the CDS object model (10) in both master and client views (5; 6).

15. Information processing system according to one or more of the preceding claims, **characterised in that** for each master or client information processing system (2; 3) connected to the CDS (1) a separate class category is set up.

16. Information processing system according to one or more of the preceding claims, **characterised in that** each class category itself can again contain two class categories for master and client views (5; 6).

17. Information processing system according to one or more of the preceding claims, **characterised in that** the class category COM (11) is subdivided into several subcategories (12; 13) formed according to certain criteria.

18. Information processing system according to one or more of the preceding claims, **characterised in that** the class categories contain:
precisely the classes (with attributes and methods) and
their relationships which are visible in the respective view (5; 6),
at least one class diagram in which the classes contained in the view (5; 6) are shown,
for each operation the specification of the signature of this method by indication of object structures.

19. Method for the operation of an information processing system for data exchange between a plurality of technical application systems which can occur as master information processing systems (3) and/or client information processing systems (2), **characterised by**:
provision of a central communications instance CDS (1) for the management and forwarding of information of a data stock,
provision of at least one master information processing system (3) which communicates with the CDS (1) via an interface and makes information which is stored on the master information processing system available to the CDS (1) on request, which communicates with the CDS (1) via an interface (page 2, lines 3-4), wherein each master information processing system (3) makes the elements of its data stock defined in an associated master view (6) available to the CDS (1),
provision of at least one client information processing system (2) which communicates with the CDS (1) via an interface and receives information from the CDS (1) on request, wherein the at least one master information processing system (3) and the at least one client information processing system (2) form a system connected to each other by the central communications instance CDS (1), and each client information processing system (2) has access to the data stocks defined in an associated client view (5) via a data access service, wherein the CDS (1) has read access to the data stocks of the master and client information processing systems (2, 3) and
provides services by which the master and client information processing systems (2, 3) can access all of the data stocks of all connected master and client information processing systems (2, 3) known to the CDS (1), wherein the information managed by the CDS (1) is divided into an object model (10) comprising a conceptual object model COM (4) which describes the whole of the data stock provided by the master and client information processing systems (2; 3), and describing views (5; 6) which are associated with the connected systems, describe the specific services in relation to the COM (4) (views),
and which determine the elements of the data stock managed by the CDS (1) which are known to the connected master and client information processing systems (2; 3) concerned, wherein the views (5; 6) for the connected systems are formed from the COM (4) by operations of projection and selection, wherein by means of the projection a choice is made as to which elements in the form of classes, attributes, methods, relationships of the COM (4) are contained in a view (5; 6), and by a selection a choice of individual objects of a class is made.

## Revendications

1. Système de traitement d'informations pour l'échange de données entre plusieurs systèmes techniques d'application qui peuvent intervenir comme systèmes de traitement d'informations maître (3) et/ou comme systèmes de traitement d'informations client (2), qui comprend :
une instance de communication centrale ZDS (1) pour gérer et transmettre des informations d'une base de données,
au moins un système de traitement d'informations maître (3) qui communique par l'intermédiaire d'une interface avec la ZDS (1) et qui met à la disposition de celle-ci, à la demande, des informations stockées sur le système de traitement d'informations maître, chaque système de traitement d'informations maître (3) mettant à la disposition de la ZDS (1) les éléments de sa base de données qui sont définis dans une vue maître (6) adéquate,
au moins un système de traitement d'informations client (2) qui communique par l'intermédiaire d'une interface avec la ZDS (1) et qui reçoit à la demande des informations de celle-ci, étant précisé que le ou les systèmes de traitement d'informations maître (3) et le ou les systèmes de traitement d'informations client (2) forment un système relié par l'instance de communication centrale ZDS (1), que chaque système de traitement d'informations client (2) a accès, par l'intermédiaire d'un service d'accès aux données, aux bases de données définies dans une vue client (5) adéquate, que la ZDS (1) accède par lecture aux bases de données des systèmes de traitement d'informations maître et client (2, 3) et offre des services grâce auxquels les systèmes de traitement d'informations maître et client (2, 3) peuvent avoir accès à toutes les bases de données, connues du ZDS (1), de tous les systèmes de traitement d'informations maître et client (2, 3) raccordés,
étant précisé que les informations gérées par la ZDS (1) sont décrites par un modèle d'objet (10) comprenant un modèle d'objet conceptuel KOM (4) qui décrit toute la base de données fournie par les systèmes de traitement d'informations maître et client (2 ; 3) et qui décrit les vues (5 ; 6) (Views) qui sont associées aux systèmes raccordés et qui décrivent les services spécifiques par rapport au KOM (4) et qui définissent les éléments de la base de données gérée par la ZDS (1) que connaissent les systèmes de traitement d'informations maître et client (2 ; 3) concernés raccordés, que les vues (5 ; 6) pour les systèmes raccordés sont formées à partir de toute la base de données du KOM (4) grâce à des opérations de projection et de sélection, et qu'un choix a lieu par l'intermédiaire de la projection pour décider quels éléments sont contenus dans une vue (5 ; 6) sous la forme de classes, d'attributs, de méthodes, de rapports du KOM (4), et qu'un choix d'objets individuels d'une classe a lieu grâce à une sélection.

2. Système de traitement d'informations selon la revendication 1, **caractérisé en ce que** dans la vue maître (6) d'un système maître (3) raccordé sont contenus les éléments de la base de données pour lesquels le système de traitement d'informations maître est le maître et possède la souveraineté de données.

3. Système de traitement d'informations selon l'une au moins des revendications précédentes, **caractérisé en ce que** dans la vue client (5) d'un système de traitement d'informations client (2) raccordé sont contenus les éléments de la base de données pour lesquels le système de traitement d'informations client peut consulter des informations auprès de la ZDS (1).

4. Système de traitement d'informations selon l'une au moins des revendications précédentes, **caractérisé en ce qu'**une sélection n'est possible que dans une vue client (5).

5. Système de traitement d'informations selon l'une au moins des revendications précédentes, **caractérisé en ce que** pour une classe, une règle de filtrage est définie comme critère de sélection, qui définit quels objets sont contenus dans la vue client (5).

6. Système de traitement d'informations selon l'une au moins des revendications précédentes, **caractérisé en ce que** chaque vue (5 ; 6) de la ZDS (1) définit les éléments du KOM (4) que connaît le système de traitement d'informations client (2 ; 3) raccordé, une vue (5 ; 6) étant décrite par :
- des classes avec leurs
attributs et
méthodes (y compris interface)
critères de sélection
- des relations
- des règles de cohérence.

7. Système de traitement d'informations selon l'une au moins des revendications précédentes, **caractérisé en ce qu'**au moins deux mécanismes de communication sous la forme d'un service d'accès aux données et d'un service de message sont mis par la ZDS (1) à la disposition des systèmes de traitement d'informations maître et client (2 ; 3) raccordés.

8. Système de traitement d'informations selon l'une au moins des revendications précédentes, **caractérisé en ce que** tous les services fournis par la ZDS (1) sont définis sous la forme de méthodes dans le modèle d'objet.

9. Système de traitement d'informations selon l'une au moins des revendications précédentes, **caractérisé en ce que** pour les services sont appliqués des critères de sélection qui ont en supplément une action de restriction sur les critères définis pour les classes.

10. Système de traitement d'informations selon l'une au moins des revendications précédentes, **caractérisé en ce que** des services d'accès aux données sont définis pour les systèmes de traitement d'informations client et maître (2 ; 3).

11. Système de traitement d'informations selon l'une au moins des revendications précédentes, **caractérisé en ce que** les systèmes de traitement d'informations client (2) définissent les services d'accès aux données qui leur sont nécessaires dans leur spécialité et avec lesquels ils veulent avoir accès aux données définies dans la vue client (5).

12. Système de traitement d'informations selon l'une au moins des revendications précédentes, **caractérisé en ce qu'**à partir des demandes des services d'accès aux données client sont définis des services d'accès aux données pour les systèmes de traitement d'informations maître (3).

13. Système de traitement d'informations selon l'une au moins des revendications précédentes, **caractérisé en ce que** des modifications dans la base de données d'un système de traitement d'informations maître (3) sont signalées à la ZDS (1) par l'intermédiaire d'un service de message, et la ZDS (1) met ces modifications à la disposition des systèmes de traitement d'informations client (2) concernés.

14. Système de traitement d'informations selon l'une au moins des revendications précédentes, **caractérisé en ce que** les services de message sont définis à l'intérieur du modèle d'objet ZDS (10) à la fois dans les vues maître et dans les vues client (5 ; 6).

15. Système de traitement d'informations selon l'une au moins des revendications précédentes, **caractérisé en ce qu'**une catégorie de classe propre est établie pour chaque système de traitement d'informations maître ou client (2 ; 3) raccordé à la ZDS (1).

16. Système de traitement d'informations selon l'une au moins des revendications précédentes, **caractérisé en ce que** chaque catégorie de classe peut elle-même contenir deux catégories de classe pour les vues maître et client (5 ; 6).

17. Système de traitement d'informations selon l'une au moins des revendications précédentes, **caractérisé en ce que** la catégorie de classe KOM (11) s'articule en plusieurs sous-catégories (12 ; 13) formées selon des critères définis.

18. Système de traitement d'informations selon l'une au moins des revendications précédentes, **caractérisé en ce que** les catégories de classe contiennent :
exactement les classes (avec les attributs et les méthodes) et leurs relations qui sont visibles dans la vue correspondante (5 ; 6),
au moins un diagramme de classes dans lequel sont représentées les classes contenues dans la vue (5 ; 6),
pour chaque opération la spécification de la signature de cette méthode grâce à l'indication de structures d'objet.

19. Procédé pour exploiter un système de traitement d'informations pour l'échange de données entre plusieurs systèmes techniques d'application qui peuvent intervenir comme systèmes de traitement d'informations maître (3) et/ou comme systèmes de traitement d'informations client (2), **caractérisé par** :
la mise à disposition d'une instance de communication centrale ZDS (1) pour gérer et transmettre des informations d'une base de données,
la mise à disposition d'au moins un système de traitement d'informations maître (3) qui communique avec la ZDS (1) par l'intermédiaire d'une interface et qui met à la disposition de celle-ci, à la demande, des informations stockées sur le système de traitement d'informations maître qui communique (S.2, Z.3-4) avec la ZDS (1) par l'intermédiaire d'une interface, chaque système de traitement d'informations maître (3) mettant à la disposition de la ZDS (1) les éléments de sa base de données qui sont définis dans une vue maître (6) adéquate,
la mise à disposition d'au moins un système de traitement d'informations client (2) qui communique par l'intermédiaire d'une interface avec la ZDS (1) et qui reçoit à la demande des informations de celle-ci, étant précisé que le ou les systèmes de traitement d'informations maître (3) et le ou les systèmes de traitement d'informations client (2) forment un système relié par l'instance de communication centrale ZDS (1), que chaque système de traitement d'informations client (2) a accès, par l'intermédiaire d'un service d'accès aux données, aux bases de données définies dans une vue client (5) adéquate, que la ZDS (1) accède par lecture aux bases de données des systèmes de traitement d'informations maître et client (2, 3) et offre des services grâce auxquels les systèmes de traitement d'informations maître et client (2, 3) peuvent avoir accès à toutes les bases de données, connues de la ZDS (1), de tous les systèmes de traitement d'information maître et client (2, 3) raccordés, étant précisé que les informations gérées par la ZDS (1) sont articulées dans un modèle d'objet (10) comprenant un modèle d'objet conceptuel KOM (4) qui décrit toute la base de données fournie par les systèmes de traitement d'informations maître et client (2 ; 3) et qui décrit les vues (5 ; 6) (Views) qui sont associées aux systèmes raccordés et qui décrivent les services spécifiques par rapport au KOM (4) (Views) qui définissent les éléments de la base de données gérée par la ZDS (1) que connaissent les systèmes de traitement d'informations maître et client concernés raccordés, que les vues (5 ; 6) pour les systèmes raccordés sont formées à partir du KOM (4) grâce à des opérations de projection et de sélection, et qu'un choix a lieu par l'intermédiaire de la projection pour décider quels éléments sont contenus dans une vue (5 ; 6) sous la forme de classes, d'attributs, de méthodes, de relations du KOM (4), et qu'un choix d'objets individuels d'une classe a lieu grâce à une sélection.
